# FASCICULE DE BREVET EUROPEEN

(11) **EP 2 697 747 B1**
(45) Date de publication et mention de la délivrance du brevet: **14.09.2016**
(21) Numéro de dépôt: 12722404.6
(22) Date de dépôt: 12.04.2012
(51) Int. Cl.: G06K 19/077, G06K 7/00, B60C 23/04

(54) **PROCEDE DE GESTION DE DONNEES ENTRE UN MARQUEUR RFID PORTE PAR UN PNEUMATIQUE ET UN CAPTEUR PORTE PAR UNE JANTE**
VERFAHREN ZUR VERWALTUNG VON DATEN ZWISCHEN EINEM RFID-MARKER AUF EINEM REIFEN UND SENSOR AUF EINER FELGE
METHOD OF MANAGING DATA BETWEEN AN RFID MARKER CARRIED BY A TYRE AND A SENSOR CARRIED BY A RIM

(30) Priorité: 12.04.2011 FR 1153191
(43) Date de publication de la demande: 19.02.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: HAMMER, Marc, 63040 Clermont-Ferrand Cedex 9 (FR)
(74) Mandataire: Dequire, Philippe Jean-Marie Denis
(86) Numéro de dépôt international: PCT/FR2012/050795
(87) Numéro de publication internationale: WO 2012/140367

(56) Documents cités:
- EP-A2- 1 769 948
- JP-A- 2004 322 833
- US-A1- 2004 044 450
- US-A1- 2004 164 140

## Description

L'invention concerne le domaine de la gestion de données contenues, d'une part, dans un marqueur RFID (conformément au sigle anglais pour Radio Frequency IDentification) lié à un pneumatique et, d'autre part, dans un module de roue comprenant au moins un capteur lié à une jante sur laquelle est monté le pneumatique.

Le pneumatique monté sur la jante forme un ensemble monté, généralement appelé roue. La roue est destinée à être montée sur un véhicule automobile.

Il est connu de contrôler la pression d'un ensemble monté à l'aide de moyens relevant d'une technologie dite TPMS conformément au sigle anglais pour Tire Pressure Monitoring System. Conformément à cette technologie, la jante porte un module de roue comprenant un ou plusieurs capteurs, généralement un capteur de pression du pneumatique et un capteur de température de l'air contenu dans le pneumatique. Le module de roue comprend également un microcontrôleur, muni d'une mémoire de stockage de données, susceptible notamment de traiter les données fournies par les capteurs.

Le module de roue est destiné à communiquer par radiofréquence avec une unité TPMS, généralement séparée de l'ensemble monté et du véhicule sur lequel est monté cet ensemble. L'unité TPMS comprend une interface pour un utilisateur et un microcontrôleur.

Il est aussi connu de fixer le module de roue sur une surface du pneumatique, par exemple par collage d'un patch après la vulcanisation de celui-ci. Il est aussi possible de ménager au cours de la fabrication du pneumatique une poche et d'introduire le module de roue dans celle-ci après la vulcanisation.

De façon à pouvoir communiquer entre eux par radiofréquence, le module de roue et l'unité TPMS comprennent chacun un module de réseau sans fil. Généralement, la communication dans le sens unité TPMS vers module de roue se fait à basse fréquence, par exemple à 125 kHz, et la communication dans le sens module de roue vers unité TPMS se fait à ultra haute fréquence, par exemple à 315 MHz, 433 MHz ou 868 MHz.

L'unité TPMS, généralement portative, permet de paramétrer le module de roue et, le cas échéant, de recueillir des mesures provenant des capteurs de ce module de roue.

Habituellement, le module de roue est susceptible de communiquer également avec un récepteur embarqué sur le véhicule sur lequel est montée la roue.

Par ailleurs, il est connu de stocker des données d'identification du pneumatique dans un marqueur RFID lié au pneumatique. Ce marqueur comporte généralement une puce, formant microcontrôleur, munie d'une mémoire de stockage des données d'identification de pneumatique et, le cas échéant, d'autres données.

Il est connu, notamment du document JP 2006282091, de faire communiquer entre eux le marqueur RFID et le module de roue. A cet effet, le module de roue est équipé des moyens de lecture des données stockées dans le marqueur RFID.

Le document JP 2004 322833A décrit un pneu avec une étiquette RFID montée sur la roue comprenant une unité TPMS. Une unité intermédiaire copie les données RFID du pneu dans l'unité TPMS.

Le document US 2004/044450 A1 décrit un système de contrôle d'identification de données RFID de roues montées sur un véhicule, permettant d'identifier quelles données sont autorisées sur le véhicule (roues montées) et d'exclure les données provenant d'autres véhicules ou de roues non montées ou inutilisées.

Les moyens de lecture du marqueur RFID permettent de rapatrier dans la mémoire du module de roue des données relatives notamment à l'identification du pneumatique. Ainsi, le module peut transmettre vers l'unité TPMS ou un récepteur porté par le véhicule des données relatives aux mesures des capteurs de ce module en les associant à des données d'identification du pneumatique.

Cependant, il est relativement coûteux d'équiper chaque module de roue, et donc chaque roue d'un véhicule automobile, de moyens de lecture d'un marqueur RFID. En effet, certains véhicules, notamment les poids lourds, comprennent un très grand nombre de roues, donc un très grand nombre de modules de roues. Par conséquent, dans un véhicule de ce type tout équipement supplémentaire intégré dans un module de roue; notamment tout équipement de lecture d'un marqueur RFID, est multiplié par le nombre de roues de ce véhicule. La multiplication des équipements de lecture de marqueurs RFID augmente les coûts liés à l'ensemble des roues du véhicule.

L'invention a notamment pour but de permettre à un module de roue de transmettre des données relatives à des mesures de capteurs de ce module associées à des données relatives à l'identification d'un pneumatique, contenues initialement dans un marqueur RFID, ceci sans avoir à intégrer dans le module des moyens de lecture du marqueur RFID.

A cet effet, l'invention a notamment pour objet un procédé de gestion de données relatives à un ensemble comprenant un pneumatique et une jante, le pneumatique portant un marqueur RFID, et l'ensemble portant un module de roue comportant au moins un capteur, l'ensemble pouvant être dans différents états, notamment un état monté dans lequel le pneumatique est monté sur la jante pour former un ensemble monté, encore appelé roue, destiné à équiper un véhicule automobile, dans lequel :
- on transmet des données entre le marqueur RFID et le module de roue caracterisé en ce qu'on transmet les données entre le marqueur RFID et le module de roue via une unité intermédiaire, séparée de l'ensemble monté et du véhicule automobile, comprenant des moyens de transmission de données ; et
- on stocke ces données, dites données RFID, dans le module de roue ; et, le capteur étant un capteur de pression du pneumatique, on efface les données RFID stockées dans le module de roue lorsque la pression détectée par le capteur de pression est inférieure ou égale à un seuil de pression prédéterminé.

Grâce à l'invention, une seule et même unité intermédiaire, séparée de tout ensemble monté et du véhicule automobile portant cet ensemble monté, peut être utilisée pour gérer la transmission des données, pour les roues d'un véhicule ou de plusieurs véhicules, entre le marqueur RFID et le module de roue équipant une roue.

Une seule et même unité intermédiaire peut regrouper les fonctionnalités que l'on trouve habituellement sur une unité TPMS et un lecteur de marqueur RFID. L'unité intermédiaire peut ainsi transmettre des données entre le marqueur RFID et le module de roue sans qu'il soit nécessaire d'intégrer des moyens de lecture du marqueur RFID dans chaque module de roue.

Grâce à l'invention également, le module de roue peut émettre vers un récepteur approprié un ensemble de données associant des données relatives aux mesures des capteurs du module et des données RFID stockées dans le module de roue.

Généralement, lorsque la pression dans un ensemble monté chute au-dessous d'un seuil prédéterminé, par exemple de façon à devenir nulle, l'ensemble monté est destiné à subir une opération de maintenance, par exemple un changement du pneumatique. L'effacement des données RFID stockées dans le module de roue permet de ne pas conserver dans ce module des données RFID périmées correspondant à un pneumatique qui a été enlevé de la roue.

On indiquera ci-dessous d'autres caractéristiques optionnelles de ce procédé de gestion de données.

On transmet des données entre le marqueur RFID et le module de roue lorsque l'ensemble comprenant le pneumatique et la jante est dans un état prédéterminé, par exemple dans un état en cours de montage, après montage, monté avec pneumatique gonflé ou monté avec pneumatique dégonflé.

Certains états de l'ensemble comprenant le pneumatique et la jante, par exemple l'état en cours de montage ou l'état monté avec pneumatique dégonflé, impliquent que cet ensemble est placé dans un lieu prédéterminé de montage ou de maintenance de l'ensemble. Il est opportun de prévoir sur ce lieu une unité intermédiaire pour la transmission de données entre le marqueur RFID et le module de roue, si bien qu'il est pertinent de transmettre les données RFID lorsque l'ensemble comprenant le pneumatique et la jante est dans un état prédéterminé correspondant à sa présence dans un lieu prédéterminé équipé de l'unité intermédiaire.

Le module de roue comprenant au moins un capteur de pression du pneumatique, on requiert la transmission des données du marqueur RFID vers le module de roue lorsque :
- l'ensemble comprenant le pneumatique et la jante est dans un état monté prédéterminé, et
- il n'y a pas de données RFID stockées dans le module de roue.

La requête de transmission de données peut être déclenchée soit par un opérateur, soit automatiquement, de manière à pouvoir associer, dès que possible, les données fournies par les capteurs du module de roues avec les données RFID.

On transmet des données du marqueur RFID vers le module de roue, et, au cours de cette transmission de données, on ajoute à ces données RFID des données supplémentaires fournies par l'unité intermédiaire, par exemple des données relatives à une opération de maintenance du pneumatique.

Comme il est probable que l'on transmette les données du marqueur RFID vers le module de roue alors que l'ensemble comprenant le pneumatique et la jante est dans un lieu prédéterminé pour une opération de maintenance, il est opportun de profiter de cette transmission de données pour transmettre des données supplémentaires relatives à l'opération de maintenance, par exemple l'indication de la réalisation d'une opération de rechapage du pneumatique.

Suivant d'autres caractéristiques optionnelles de cette unité de transmission de données :
- l'unité comprend :
   - des moyens formant réseau de communication sans fil entre l'unité intermédiaire et le marqueur RFID et entre l'unité intermédiaire et le module de roue,
   - des moyens formant microcontrôleur, et
   - des moyens formant interface pour un utilisateur ;
- l'unité comprend :
   - des première et seconde unités associées respectivement au module de roue et au marqueur RFID,
   - des moyens formant réseau de communication entre les première et seconde unités,
   - les moyens formant réseau sans fil comportant un premier module de réseau sans fil agencé dans la première unité, destiné à communiquer avec le module de roue, et un second module de réseau sans fil agencé dans la seconde unité, destiné à communiquer avec le marqueur RFID,
   - les moyens formant microcontrôleur comprenant des premier et second microcontrôleurs agencés respectivement dans les première et seconde unités,
   - les moyens formant interface pour un utilisateur comprenant des première et seconde interfaces agencées respectivement dans les première et seconde unités ;
- les moyens formant réseau de communication entre les première et seconde unités sont de type filaire série ;
   - l'unité forme un ensemble portatif.

Comme il est probable que l'on transmette des données du marqueur RFID vers le module de roue lorsque l'ensemble comprenant le pneumatique et la jante est dans un état en cours de montage ou dans un état juste après montage, il peut être opportun d'intégrer l'unité intermédiaire comprenant les moyens de transmission de données dans un dispositif de montage du pneumatique sur la jante. L'unité intermédiaire devient dans ce cas une unité fixe.

L'invention concerne plus particulièrement les véhicules automobiles de type tourisme, SUV (acronyme anglais pour « Sport Utility Vehicles »), deux roues (notamment motos), avions, ainsi que les véhicules industriels choisis parmi les camionnettes, les « poids-lourds » - c'est-à-dire les métros, les bus, les engins de transport routier (camions, tracteurs, remorques), les véhicules "hors-la-route" tels que les engins agricoles ou de génie civil -, et les autres véhicules de transport ou de manutention.

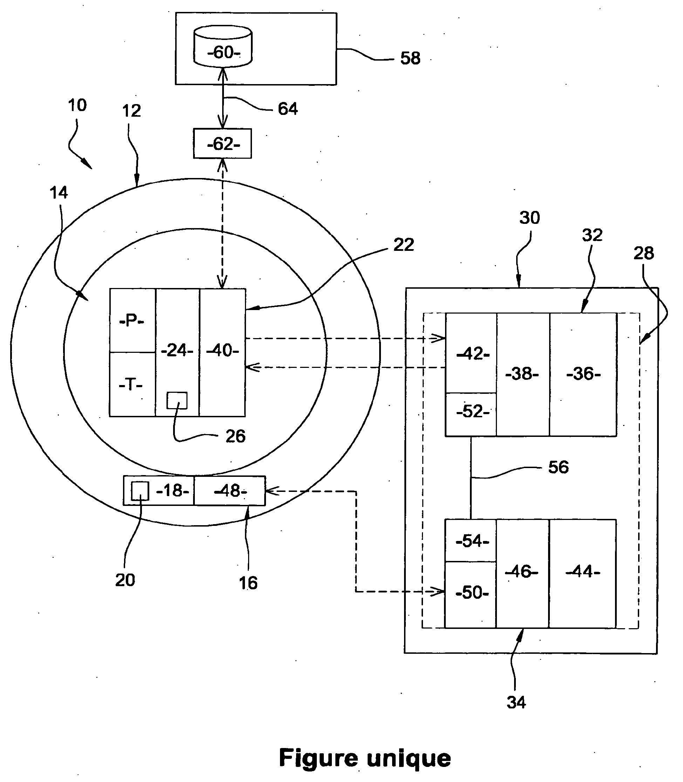

L'invention sera mieux comprise à la lecture de la description qui va suivre donnée uniquement à titre d'exemple faite en se référant aux dessins comprenant une figure unique qui est une vue schématique d'un ensemble de moyens de gestion de données comprenant l'unité de transmission de données selon l'invention permettant la mise en oeuvre du procédé de gestion de données selon l'invention.

On a représenté sur la figure unique un ensemble 10 comprenant un pneumatique 12 et une jante 14.

L'ensemble 10 peut être dans différents états, notamment un état monté tel que représenté sur la figure. Dans cet état, le pneumatique 12 est monté sur la jante 14 pour former un ensemble monté, encore appelé roue. L'ensemble monté est destiné à équiper un véhicule automobile.

L'ensemble 10 comprend également un marqueur RFID 16 lié de façon connue en soi au pneumatique 12. Ce marqueur 16 comporte une puce 18 formant un microcontrôleur muni d'une mémoire 20. Cette mémoire 20 est destinée au stockage de données, dites données RFID, comprenant des données d'identification du pneumatique 12 et, le cas échéant, d'autres données pertinentes à l'égard de ce pneumatique 12.

La jante 14 porte un module de roue 22 comprenant un ou plusieurs capteurs, par exemple, comme illustré sur la figure, un capteur P de pression du pneumatique et un capteur T de température de l'air sous pression dans le pneumatique.

Le module de roue 22 comprend également un microcontrôleur 24 muni d'une mémoire 26 de stockage de données.

On a également représenté sur la figure une unité intermédiaire 28, séparée de l'ensemble monté 10 et du véhicule automobile destiné à porter cet ensemble 10, comprenant des moyens de transmission de données.

Dans l'exemple illustré sur la figure, l'unité intermédiaire 28 est portée par un dispositif classique 30 de montage du pneumatique 12 sur la jante 14.

En variante, l'unité intermédiaire 28 pourrait former un ensemble portatif.

L'unité intermédiaire 28 comprend, dans l'exemple illustré, des première 32 et seconde 34 unités associées respectivement au module de roue 22 et au marqueur RFID 16.

La première unité 32 est une unité TMPS comprenant une interface 36 pour un utilisateur et un microcontrôleur 38. L'unité TMPS 32 est destinée à communiquer avec le module de roue 22 par radiofréquence. A cet effet, le module de roue 22 comprend un module de réseau sans fil 40. De même, l'unité TPMS comprend un module de réseau sans fil 42. Généralement, la communication entre le module de roue 22 et l'unité TMPS 32 se fait avec des fréquences différentes selon le sens de la communication. Ainsi, généralement, la communication dans le sens unité TMPS 32 vers le module de roue 22 se fait à basse fréquence, par exemple à 125 kHz, et la communication dans le sens module de roue 22 vers unité TPMS se fait à ultra haute fréquence, par exemple à 315 MHz, 433 MHz ou 868MHz.

La seconde unité 34 forme une unité RFID comprenant une interface 44 pour un utilisateur et un microcontrôleur 46. Une telle unité RFID peut comprendre un PDA conformément au sigle anglais pour Personal Digital Assistant.

Le marqueur RFID 16 et l'unité RFID 34 sont destinés à communiquer entre eux par radiofréquence. A cet effet, le marqueur RFID 16 comprend un module de réseau sans fil 48. De même, l'unité RFID 34 comprend un module de réseau sans fil 50.

Généralement, la communication entre le marqueur RFID 16 et l'unité RFID 34 se fait à ultra haute fréquence.

Les modules de réseau sans fil 40, 42, 48, 50 forment donc des moyens de communication sans fil, d'une part, entre l'unité intermédiaire 28 et le marqueur RFID 16 et, d'autre part, entre l'unité intermédiaire 28 et le module de roue 22.

Par ailleurs, les microcontrôleurs 38, 46 constituent ensemble des moyens formant microcontrôleur de l'unité intermédiaire 28, et les interfaces utilisateurs 36, 44 constituent ensemble des moyens formant une interface pour un utilisateur de l'unité intermédiaire 28.

Ainsi, en variante, les moyens formant réseau de communication sans fil, les moyens formant microcontrôleur et les moyens formant interface pour un utilisateur de l'unité intermédiaire 28 pourraient être réunis dans une seule et même unité plutôt que répartis entre l'unité TPMS 32 et l'unité RFID 34 comme dans l'exemple illustré.

L'unité intermédiaire 28 comprend encore des moyens formant réseau de communication entre l'unité TPMS 32 et l'unité RFID 34. Dans l'exemple illustré, ces moyens comprennent un module réseau filaire 52 agencé dans l'unité TPMS 28 et un module réseau filaire 54 agencé dans l'unité RFID 34. Les modules réseau 52, 54 sont reliés entre eux par une connexion série 56, par exemple du type USB conformément au sigle anglais pour Universal Serial Bus ou du type RS 232. En variante, les moyens formant réseau de communication entre l'unité TPMS 32 et l'unité RFID 34 peuvent être de type sans fil.

On a également représenté sur la figure un terminal 58 embarqué sur le véhicule ou séparé de ce véhicule. Le terminal 58 est équipé de préférence d'une base de données 60.

Le module de roue 22 est destiné à communiquer avec le terminal 58, par exemple via un terminal intermédiaire 62 embarqué sur le véhicule. Ce terminal intermédiaire 62 peut recevoir, le cas échéant, des données provenant de plusieurs modules de roue portés par différentes roues du véhicule.

Le terminal intermédiaire 62 est par exemple de type RCU conformément au sigle anglais pour Receiver Control Unit.

Ainsi, le module réseau 40 du module de roue 22 est destiné à communiquer par radiofréquence avec le terminal intermédiaire 62. Dans l'exemple illustré, le terminal intermédiaire 62 est destiné à communiquer par l'intermédiaire d'un réseau filaire série, par exemple un bus CAN 64 conformément au sigle anglais pour Controller Area Network, avec le terminal 58, plus particulièrement avec la base de données 60.

En variante, la communication entre le terminal intermédiaire 62 et le terminal 58, plus particulièrement la base de données 60, pourrait se faire par un réseau sans fil du type GPRS conformément au sigle anglais pour General Packet Radio Service.

L'échange de données entre le module de roues 22 et le terminal 58 peut se faire de façon périodique ou à l'occasion de requêtes ponctuelles.

L'unité intermédiaire 28 permet de gérer des données relatives à l'ensemble 10 comprenant le pneumatique 12, portant le marqueur RFID 16 et la jante 14, portant le module de roue 22, conformément au procédé de gestion suivant dont on précisera ci-dessous les étapes liées à l'invention.

Selon ce procédé, on transmet des données entre le marqueur RFID 16 et le module de roue 22 via l'unité intermédiaire 28.

De préférence, cette transmission de données entre le marqueur RFID 16 et le module de roue 22 a lieu lorsque l'ensemble 10 est dans un état prédéterminé, par exemple dans un état en cours de montage, après montage (notamment après un premier montage), monté avec pneumatique gonflé ou monté avec pneumatique dégonflé.

De préférence également, on prévoit de requérir la transmission des données du marqueur RFID 16 vers le module de roue 22 lorsque :
- l'ensemble 10 est dans un état monté prédéterminé, et
- il n'y a pas de données RFID stockées dans le module de roue 22.

Ainsi, on procède de préférence comme suit.

Tout d'abord, un opérateur monte le pneumatique 12 sur la jante 14 et gonfle le pneumatique. L'ensemble 10 est alors dans un état monté avec pneumatique gonflé.

Puis, dans cet état de l'ensemble 10, par exemple sur requête d'un opérateur via le terminal 58 ou sur requête automatique du module de roue 22 détectant qu'il n'y a pas de données RFID stockées dans sa mémoire 26, l'unité RFID 34 lit les données stockées dans la mémoire 20 du marqueur RFID 16 puis les transmet à l'unité TPMS 32. Cette unité 32 transmet alors les données RFID au module de roue 22 de façon à stocker ces données RFID dans la mémoire 26 de ce module 22.

Ainsi, les données du marqueur RFID 16 transmises vers le module de roue 22 sont stockées dans le module de roue 22, plus particulièrement dans la mémoire 26 de ce module.

Le cas échéant, lorsque l'unité TPMS 32 transmet les données RFID vers le module de roue 22, elle ajoute à ces données RFID des données supplémentaires fournies par l'unité TPMS 32 ou l'unité RFID 34, par exemple des données relatives à une opération de maintenance du pneumatique 12 ayant eu lieu avant son montage sur la jante 14.

Après stockage des données RFID dans la mémoire 26 du module de roue, l'ensemble 10 peut être monté sur un véhicule équipé par exemple du terminal 58 et du terminal intermédiaire 62. L'ensemble de roue 22 peut alors émettre vers le terminal intermédiaire 62 et le terminal 58 un ensemble de données associant des données relatives aux capteurs P, T et des données RFID stockées dans la mémoire 26. La base de données 60 peut ainsi associer les mesures des capteurs aux données RFID permettant d'identifier le pneumatique 12.

Lorsque la pression détectée par le capteur de pression P est inférieure ou égale à un seuil de pression prédéterminé, en général un seuil proche de la pression nulle, on efface, par exemple automatiquement, les données RFID stockées dans le module de roue 22. Ainsi, lors d'un changement de pneumatique 12, le pneumatique remplacé étant nécessairement dégonflé, on évite de conserver dans la mémoire 26 du module de roue 22 des données RFID relatives à un pneumatique qui a été démonté de l'ensemble 10.

## Revendications

1. Procédé de gestion de données relatives à un ensemble (10) comprenant un pneumatique (12) et une jante (14), le pneumatique portant un marqueur RFID (16), et l'ensemble portant un module de roue (22) comportant au moins un capteur (P, T), l'ensemble (10) pouvant être dans différents états, notamment un état monté dans lequel le pneumatique (12) est monté sur la jante (14) pour former un ensemble (10) monté, encore appelé roue, destiné à équiper un véhicule automobile, dans lequel :
- on transmet des données entre le marqueur RFID (16) et le module de roue (22), **caractérisé en ce que** on transmet les données entre le marqueur RFID (16) et le module de roue (22) via une unité intermédiaire (28), séparée de l'ensemble (10) monté et du véhicule automobile, comprenant des moyens de transmission de données (42, 50, 52, 54) ; et
- on stocke ces données, dites données RFID, dans le module de roue (22) ; et,
le capteur (P, T) étant un capteur (P) de pression du pneumatique, on efface les données RFID stockées dans le module de roue (22) lorsque la pression détectée par le capteur de pression (P) est inférieure ou égale à un seuil de pression prédéterminé.

2. Procédé selon la revendication 1, dans lequel on transmet des données entre le marqueur RFID (16) et le module de roue (22) lorsque l'ensemble (10) comprenant le pneumatique (10) et la jante (12) est dans un état prédéterminé, par exemple dans un état en cours de montage, après montage, monté avec pneumatique (12) gonflé ou monté avec pneumatique (12) dégonflé.

3. Procédé selon la revendication 2, dans lequel on requiert la transmission des données du marqueur RFID (16) vers le module de roue (22) lorsque :
- l'ensemble (10) comprenant le pneumatique (12) et la jante (14) est dans un état monté prédéterminé, et
- il n'y a pas de données RFID stockées dans le module de roue (22).

4. Procédé selon l'une quelconque des revendications 1 à 3, dans lequel, on transmet des données du marqueur RFID (16) vers le module de roue (22), et, au cours de cette transmission de données, on ajoute à ces données RFID des données supplémentaires fournies par l'unité intermédiaire (28), par exemple des données relatives à une opération de maintenance du pneumatique (12).

5. Procédé selon l'une quelconque des revendications 1 à 4, dans lequel l'unité intermédiaire (28) comprend :
- des moyens (42, 50) formant réseau de communication sans fil entre l'unité intermédiaire (28) et le marqueur RFID (16) et entre l'unité intermédiaire (28) et le module de roue (22),
- des moyens formant microcontrôleur (38, 46), et
- des moyens formant interface (36, 44) pour un utilisateur.

6. Procédé selon la revendication 5, dans lequel l'unité intermédiaire (28) comprend :
- des première (32) et seconde (34) unités associées respectivement au module de roue (22) et au marqueur RFID (16),
- des moyens (52 à 56) formant réseau de communication entre les première (32) et seconde (34) unités,
- les moyens formant réseau sans fil comportant un premier module de réseau sans fil (42) agencé dans la première unité (32), destiné à communiquer avec le module de roue (22), et un second module de réseau sans fil (50) agencé dans la seconde unité (34), destiné à communiquer avec le marqueur RFID (16),
- les moyens formant microcontrôleur comprenant des premier (38) et second (34) microcontrôleurs agencés respectivement dans les première (32) et seconde (34) unités,
- les moyens formant interface pour un utilisateur comprenant des première (36) et seconde (44) interfaces agencées respectivement dans les première (32) et seconde (34) unités.

7. Procédé selon la revendication 6, dans lequel les moyens (56) formant réseau de communication entre les première (32) et seconde (34) unités sont de type filaire série.

8. Procédé selon l'une quelconque des revendications précédentes, dans lequel l'unité intermédiaire (28) forme un ensemble portatif.

## Patentansprüche

1. Verfahren zum Verwalten von Daten, die auf eine Anordnung (10) bezogen sind, die einen Luftreifen (12) und eine Felge (14) umfasst, wobei der Luftreifen eine RFID-Kennung (16) trägt und wobei die Anordnung ein Radmodul (22) trägt, das wenigstens ein Sensor (P, T) enthält, wobei die Anordnung (10) in verschiedenen Zuständen sein kann, insbesondere in einem montierten Zustand, in dem der Luftreifen (12) an der Felge (14) montiert ist, um eine montierte Anordnung (10), die auch Rad genannt wird, zu bilden, die dazu bestimmt ist, ein Kraftfahrzeug auszurüsten, wobei:
- Daten zwischen der RFID-Kennung (16) und dem Radmodul (22) übertragen werden, **dadurch gekennzeichnet, dass** die Daten zwischen der RFID-Kennung (16) und dem Radmodul (22) über eine Zwischeneinheit (28), die von der montierten Anordnung (10) und von dem Kraftfahrzeug getrennt ist und Datenübertragungsmittel (42, 50, 52, 54) aufweist, übertragen werden; und
- diese Daten, die RFID-Daten genannt werden, in dem Radmodul (22) gespeichert werden; und
dann, wenn der Sensor (P, T) ein Sensor (P) für den Druck des Luftreifens ist, die in dem Radmodul (22) gespeicherten RFID-Daten gelöscht werden, wenn der durch den Drucksensor (P) detektierte Druck kleiner oder gleich einem vorgegebenen Druckschwellenwert ist.

2. Verfahren nach Anspruch 1, wobei die Daten zwischen der RFID-Kennung (16) und dem Radmodul (22) übertragen werden, wenn die Anordnung (10), die den Luftreifen (10) und die Felge (12) umfasst, in einem vorgegebenen Zustand ist, beispielsweise in einem Zustand während der Montage, nach der Montage, montiert an dem aufgeblasenen Luftreifen (12) oder montiert an dem nicht aufgeblasenen Luftreifen (12).

3. Verfahren nach Anspruch 2, wobei die Übertragung von Daten von der RFID-Kennung (16) zu dem Radmodul (22) angefordert wird, wenn:
- die Anordnung (10), die den Luftreifen (12) und die Felge (14) umfasst, in einem vorgegebenen montierten Zustand ist und
- in dem Radmodul (22) keine RFID-Daten gespeichert sind.

4. Verfahren nach einem der Ansprüche 1 bis 3, wobei Daten von der RFID-Kennung (16) an das Radmodul (22) übertragen werden und während dieser Datenübertragung zu diesen RFID-Daten zusätzliche Daten hinzugefügt werden, die von der Zwischeneinheit (28) geliefert werden, beispielsweise Daten, die auf einen Wartungsbetrieb des Luftreifens (12) bezogen sind.

5. Verfahren nach einem der Ansprüche 1 bis 4, wobei die Zwischeneinheit (28) Folgendes umfasst:
- Mittel (42, 50), die ein drahtloses Kommunikationsnetz zwischen der Zwischeneinheit (28) und der RFID-Kennung (16) und zwischen der Zwischeneinheit (28) und dem Radmodul (22) bilden,
- Mittel, die einen Mikrocontroller (38, 46) bilden, und
- Mittel, die eine Schnittstelle (36, 44) für einen Anwender bilden.

6. Verfahren nach Anspruch 5, wobei die Zwischeneinheit (28) Folgendes umfasst:
- eine erste (32) und eine zweite (34) Einheit, die dem Radmodul (22) bzw. der RFID-Kennung (16) zugeordnet sind,
- Mittel (52 bis 56), die ein Kommunikationsnetz zwischen der ersten (32) und der zweiten (34) Einheit bilden;
- wobei die Mittel, die ein drahtloses Netz bilden, ein erstes drahtloses Netzmodul (42), das in der ersten Einheit (32) angeordnet ist und dazu bestimmt ist, mit dem Radmodul (22) zu kommunizieren, und ein zweites drahtloses Netzmodul (50), das in der zweiten Einheit (34) angeordnet ist und dazu bestimmt ist, mit der RFID-Kennung (16) zu kommunizieren, umfassen,
- wobei die Mittel, die den Mikrocontroller bilden, einen ersten (38) und einen zweiten (34) Mikrocontroller enthalten, die in der ersten (32) bzw. in der zweiten (34) Einheit angeordnet sind,
- wobei die Mittel, die eine Schnittstelle für einen Anwender bilden, eine erste (36) und eine zweite (44) Schnittstelle enthalten, die in der ersten (32) bzw. in der zweiten (34) Einheit angeordnet sind.

7. Verfahren nach Anspruch 6, wobei die Mittel (56), die das Kommunikationsnetz zwischen der ersten (32) und der zweiten (34) Einheit bilden, vom seriellen drahtgebundenen Typ sind.

8. Verfahren nach einem der vorhergehenden Ansprüche, wobei die Zwischeneinheit (28) eine tragbare Anordnung bildet.

## Claims

1. Method of managing data relating to an assembly (10) comprising a tyre (12) and a rim (14), the tyre carrying an RFID marker (16), and the assembly carrying a wheel module (22) including at least one sensor (P, T), the assembly (10) being capable of being in different states, notably a mounted state in which the tyre (12) is mounted on the rim (14) to form a mounted assembly (10), also called a wheel, intended to be fitted to a motor vehicle, in which:
- data are transmitted between the RFID marker (16) and the wheel module (22), **characterized in that** data are transmitted between the RFID marker (16) and the wheel module (22) via an intermediate unit (28), separate from the mounted assembly (10) and the motor vehicle, comprising data transmission means (42, 50, 52, 54); and
- these data, called RFID data, are stored in the wheel module (22); and
the sensor (P, T) being a pressure sensor (P) of the tyre, the RFID data stored in the wheel module (22) are erased when the pressure detected by the pressure sensor (P) is less than or equal to a predetermined pressure threshold.

2. Method according to Claim 1, wherein data are transmitted between the RFID marker (16) and the wheel module (22) when the assembly (10) comprising the tyre (10) and the rim (12) is in a predetermined state, for example a state in the course of mounting, a state after mounting, a mounted state with the tyre (12) inflated, or a mounted state with the tyre (12) deflated.

3. Method according to Claim 2, wherein the transmission of the data from the RFID marker (16) towards the wheel module (22) is requested when:
- the assembly (10) comprising the tyre (12) and the rim (14) is in a predetermined mounted state, and
- there are no RFID data stored in the wheel module (22).

4. Method according to any one of Claims 1 to 3, wherein data are transmitted from the RFID marker (16) towards the wheel module (22), and supplementary data supplied by the intermediate unit (28), for example data relating to a maintenance operation performed on the tyre (12), are added to these RFID data in the course of this data transmission.

5. Method according to any one of Claims 1 to 4, wherein the intermediate unit (28) comprises:
- means (42, 50) forming a wireless communication network between the intermediate unit (28) and the RFID marker (16) and between the intermediate unit (28) and the wheel module (22),
- means forming a microcontroller (38, 46), and
- means forming a user interface (36, 44).

6. Method according to Claim 5, wherein the intermediate unit (28) comprises:
- first (32) and second (34) units associated, respectively, with the wheel module (22) and with the RFID marker (16),
- means (52 to 56) forming a communication network between the first (32) and second (34) units,
- the means forming a wireless network including a first wireless network module (42) arranged in the first unit (32), intended to communicate with the wheel module (22), and a second wireless network module (50) arranged in the second unit (34), intended to communicate with the RFID marker (16),
- the means forming a microcontroller comprising first (38) and second (34) microcontrollers arranged in the first (32) and second (34) units respectively,
- the means forming a user interface comprising first (36) and second (44) interfaces arranged in the first (32) and second (34) units respectively.

7. Method according to Claim 6, wherein the means (56) forming a communication network between the first (32) and second (34) units are of the serial wireless type.

8. Method according to any one of the previous Claims, wherein the intermediate unit (28) forms a portable assembly.
